# EUROPEAN PATENT SPECIFICATION

(11) **EP 0 992 931 B1**
(45) Date of publication and mention of the grant of the patent: **06.12.2006**
(21) Application number: 98118821.2
(22) Date of filing: 05.10.1998
(51) Int. Cl.: G06K 7/10

(54) **Microwave tagging system**
Mikrowellen-Etikettierungssystem
Système d'étiquettage à micro-ondes

(43) Date of publication of application: 12.04.2000
(73) Proprietor: Eidgenössische Technische Hochschule Zürich, 8092 Zürich (CH)
(72) Inventor: Kossel, Marcel André, 4207 Bretwil (CH)
(74) Representative: Blum, Rudolf Emil

(56) References cited:
- EP-A- 0 308 964
- FR-A- 2 682 546

## Description

### TECHNICAL FIELD

The invention refers to the field of radio communication for tagging systems. The invention is based on the subject-matter as set forth in the preamble of the claims 1 and 13.

### BACKGROUND ART

Radio-frequency identification (RFID) systems serve mainly to manage production lines and manufacturing processes of various kinds of products in a highly efficient way. Data carriers or tags are attached to work pieces transported on a conveyor belt, to a carrying plate such as a pallet or to containers on a railway carriage. The memory of the data carrier contains an identification code of the object the data carrier is attached to, data processing instructions and the like. A number of main apparatuses are arranged along the conveyor belt to conduct communication with the passing data carriers by writing data in or reading data from their memories. After updating the memory of a data carrier, the work piece is transferred to the next production process.

Microwave tagging systems of the described kind are battery-powered and thus must have a low power consumption at simultaneously low demodulation error rate. These two requirements are often in conflict because modulation schemes with low error rates need power-demanding demodulation circuits. Typical application areas of such microwave tagging systems are manufacturing halls with metallic walls reflecting incident microwaves and hence causing demodulation errors due to multipath propagation, circular polarization inversions and signal fading effects. Therefore a need for safe data transmission in terms of few demodulation errors in combination with low power consumption and small tag dimensions exists.

In the EP 0 308 964 A2 an RFID system using tags attached to moving articles is disclosed. The communication between the master or main unit and the tag or sub unit is effected by circular polarized microwaves that are modulated by amplitude shift keying (ASK), phase shift keying (PSK) or frequency shift keying (FSK). In more detail the main unit modulates a first carrier by ASK, generates an unmodulated second carrier of different frequency, mixes both carriers by quadrature phase shift keying (QPSK) and transmits them as a first circular-polarized wave. In the sub unit the waves are separated by QPSK demodulation and the data on the first carrier are demodulated. For backward communication the second carrier is modulated by PSK and optionally FSK, is retransmitted with identical circular polarization and PSK and optionally FSK demodulated in the main unit. Severe drawbacks of this system are its complexity, involving several modulation and demodulation steps and schemes, the need for two frequencies to separate outgoing and incoming waves and the need for several sophisticated, power-consuming components on the sub unit. In order to prolong the battery lifetime on the tag, the main unit can transmit start data on the first carrier using a second, orthogonal circular-polarized wave to awake the tag from a sleep mode.

Another tagging system is described in WO 90/10200 that is based on QPSK modulation in the main and sub unit. The main unit establishes communication by sending a linear polarized wave. In the sub unit a circular-polarized component is received using a circular antenna sensitive to one direction of rotation. For the purpose of tag identification the circular component can be ASK or PSK modulated and amplified by a transistor and echoed back by a circular antenna of opposite direction of rotation. A major problem in this system is the fact that the ASK, PSK or QPSK modulation schemes require a comparison with fixed or absolute signal levels. Therefore linear-polarized jamming signals may cause unacceptably large error rates and make communication impossible.

Both prior art RFID systems fail to solve the problem of odd numbers of reflections that turn the polarization sense of circular-polarized waves and prohibit a correct demodulation.

### BRIEF SUMMARY OF THE INVENTION

It is the object of the invention to provide a microwave tagging method and apparatus that is operable with reduced power consumption and simultaneously low demodulation error rates and has a simplified construction. This object is achieved according to the invention by the subject-matter as set forth in claims 1 and 13.

The invention resides in a method and apparatus for radio communication between a main unit and a sub unit, wherein a binary modulation of the rotation sense of circular-polarized waves, i. e. a circular polarization modulation (CPM), is used for the transmission of binary data in at least one communication direction.

The circular polarization modulation and demodulation (CPM) according to the invention is simpler to implement than conventional FSK modulation schemes and is based on the detection of relative signal levels of left and right circular-polarized waves instead of absolute signal levels as in conventional ASK or PSK modulation schemes. As a consequence the circular polarization modulation (CPM) is largely tolerant against linear-polarized jamming signals. Furthermore the power requirements of the tag are substantially reduced and allow longer battery lifetimes and/or larger communication ranges.

In one embodiment the receivers of the main and sub unit comprise separate receiver channels for left and right circular-polarized waves. As well the transmitters of the main and sub unit comprise simple means, such as RF switches, for alternately activating orthogonal circular-polarized antenna ports. These measures allow in particular a very simple tag design with few power-saving components.

In another embodiment the main unit comprises four receiver sections for separate demodulation of left and right circular-polarized waves in different time intervals. The receiver sections may comprise single-sideband downconverters with or without frequency filters to demodulate circular polarization-modulated signals from the sub unit and isolate them from cross-talk and/or integrators to prevent or reduce signal fading.

In a further embodiment an active sub unit comprises a battery-powered RF amplifier steered by switches to amplify incoming right or left circular-polarized waves and backscatter them with inverted polarization.

In an alternate embodiment passive sub units are described that simply either absorb incoming waves or transmit them to an orthogonal circular-polarized antenna port.

A first embodiment referring to the method according to the invention comprises an analysis of the sequential order of bits. In particular binary data are encoded by symbols, which belong to groups that are invariant under binary inversions. Preferentially, in both communication directions two-digit binary symbols are used and are decoded by an EXOR-relation between the digits. These measures render the radio communication insensitive to polarization inversions caused by an uneven number of metallic reflections in the aerial path. Thus the robustness of communication is improved and the signal error rate is decreased.

A second embodiment referring to the method according to the invention comprises an analysis of the temporal order of bits. In particular a predefined sequence of bit pairs from the main unit is modulated in the sub unit by selectively reflecting either the first or second bit of each bit pair thereby encoding logical values "0" and "1". Preferentially the predefined bit sequence is represented by a sequence of alternating left and right circular-polarized waves. These features further simplify the tag design and secure a reliable communication from the tag to the main unit independent of polarization or bit inversions. Consequently low error rates and high data rates are achieved with minimal power consumption even in time variant paths.

### BRIEF DESCRIPTION OF THE DRAWINGS

Other objects, features and advantages of the present invention will be described with reference to the accompanying drawings, in which
- Fig. 1: is a block diagram of a main unit;
- Fig. 2: is a block diagram of an active sub unit;
- Fig. 3a, 3b: are block diagrams of passive sub units;
- Fig. 4: is an illustration of outward communication from the main to the sub unit;
- Fig. 5 and 7: are illustrations of inward communication from the sub to the main unit; and
- Fig. 6a-6c: are block diagrams of modified main units.

In the drawings identical parts are designated by identical reference numerals.

### DESCRIPTION OF THE PREFERRED EMBODIMENTS

In the following embodiments, the system includes a main apparatus or reader or interrogator or main unit 1, typically located at a predetermined position, and a data carrier or tag or transponder or sub unit 2 attachable to a moving object. When the object carrying the tag 2 passes a position in front of the main unit 1, data is read from or written into the tag memory 205, 305 by the main unit 1.

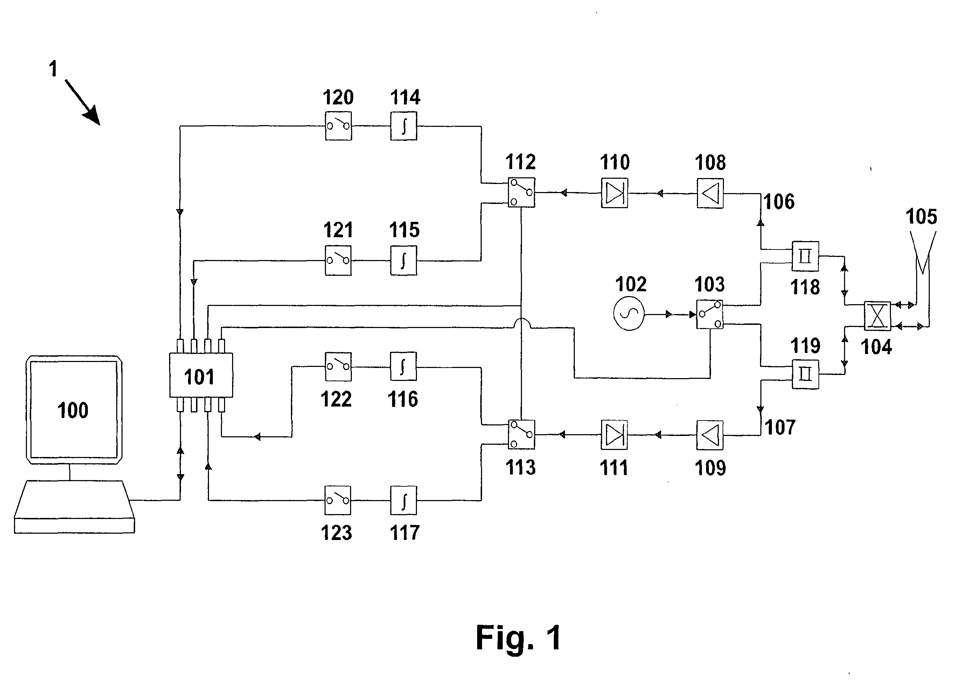

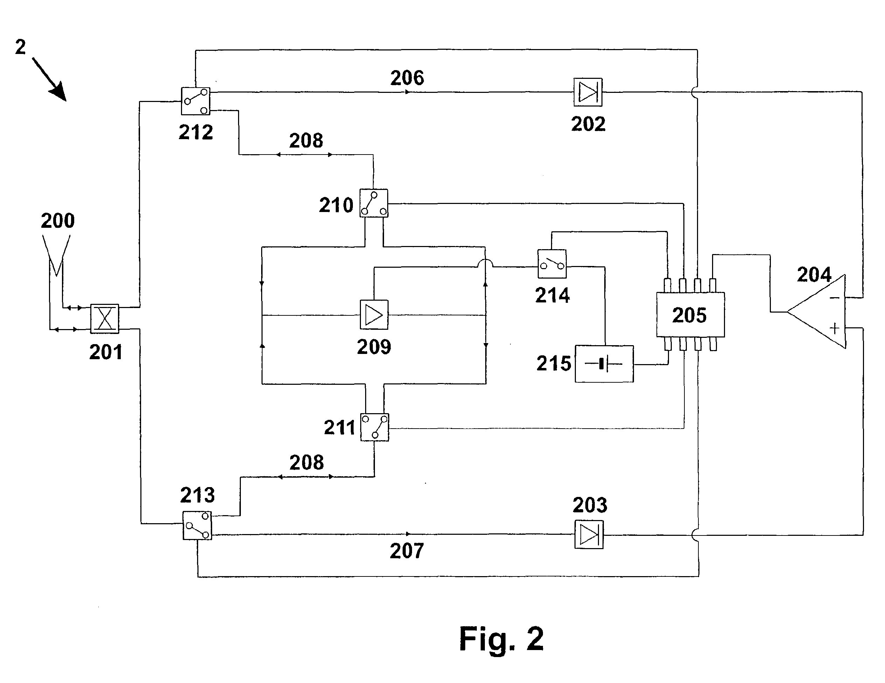

A principle of a first embodiment of the present invention will be described with reference to Fig. 1 and Fig. 2. In this first section the transmission of data from the main to the sub unit is explained. Identification data, job processing data, interrogating commands, etc. can be entered by the user to a computer terminal 100 connected to the main unit 1. The main apparatus 1 of the first embodiment has a microwave generator 102, in particular a microwave oscillator 102 or a frequency sweeper, for the frequency band of interest, for instance the 2.4 GHz, 5.8 GHz or 24 GHz Industrial-Scientific-Medical (ISM) band. According to the present invention the carrier wave of the microwave oscillator 101 or frequency sweeper is circular polarization modulated correspondingly to the data to be sent to the data carrier 2. Circular polarization modulation (CPM) can be achieved by modulating bit streams in a way that a logical "0" becomes a right-hand circular-polarized wave R and a logical "1" is attached to a left-hand circular-polarized wave L or vice versa. This kind of modulation scheme is applied for communication in at least one direction, preferentially for outward communication from the main 1 to sub unit 2. In particular circular polarization-modulated waves are used in both communication directions. The CPM scheme allows very simple, power-saving and reliable modulation and demodulation circuits, in particular on the tag 2, as will be described further below.

The problem of microwave reflections at metallic walls changing the polarization sense and inducing bit inversions can be overcome in time-invariant paths by exchange of test sequences. For example a wave of long duration emitted with one circular polarization sense can define at the receiving unit 1, 2 a first circular polarization representing a logical "0", and a wave of short duration emitted with the opposite circular polarization sense can define at the receiving unit 1, 2 a second circular polarization representing a logical "1".

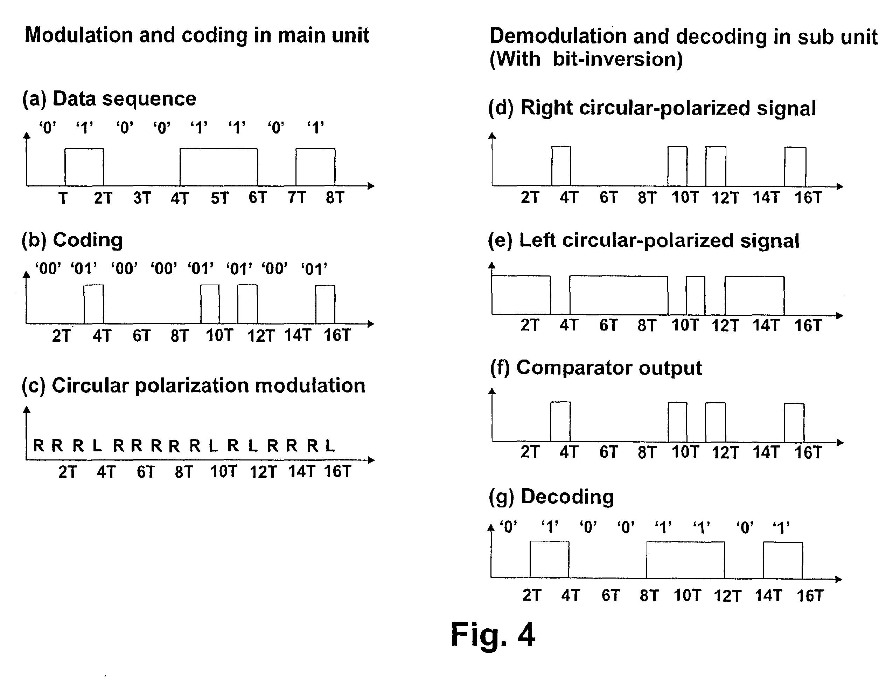

In another preferred embodiment bit-inversion tolerance of the tag 2 is achieved by a suitable data-encoding scheme. For this purpose the data demodulation shall comprise an analysis of a sequential order of transmitted bits by a controller 101; 205; 305. In particular, for communication from the main unit 1 to the sub unit 2, logical values "0", "1" of the binary data are encoded in the main unit 1 by multi-bit symbols, such that a plurality of multi-bit symbols are separated into a first and second group to represent a logical "0" and a logical "1" and that the first and second group are both invariant under binary inversions, and after transmission and demodulation the symbols are decoded in the sub unit 2. This symbolic encoding assures bit inversion tolerant communication even in time-variant aerial paths. A particularly simple embodiment will be shown in Fig. 4.

The data sent from the computer terminal 100 to the main unit 1 is processed on the main unit 1 in a controller 101 consisting typically of a micro processor 101 which encodes the data stream according to the invention. The circular polarization modulator is simply composed of a double-throw single-pole switch 103 which toggles the microwave carrier of the oscillator 102 or frequency sweeper between its two output ports. These two output ports are connected either to two circular-polarized antennas of opposite polarization sense or to two mutually isolated ports of a 3dB/90° hybrid 104 whose output ports are connected to a dual circular-polarized antenna 105. The axial ratio of the left-hand and right-hand circular-polarized antenna or the dual circular-polarized antenna 105 should be equal to one and the crosspolarization isolation of the circular-polarized antenna ports with opposite polarization sense or the dual-polarized antenna ports 105 in conjunction with the 3dB/90° hybrid 104 should be as low as possible. By using a frequency sweeper aperture-coupled patch antennas, not shown here, will be preferred because they have a larger bandwidth.

In this second section the reception and demodulation of the transmitted circular polarization-modulated microwave carrier at the sub unit 2 is described. The tag 2 possesses either two circular-polarized antennas of opposite polarization sense or preferentially a space-saving dual polarized antenna 200 in conjunction with a 3dB/90° hybrid 201 for the reception of the circular polarization-modulated carrier wave. It is mentioned here that the antennas 105; 200, 201; 300, 301 serve to transmit and receive essentially circular-polarized waves; slightly elliptical-polarized waves are admissible as well. The demodulation can be simply done by connecting two identical RF detectors 202, 203 to the mutually isolated output ports of the 3dB/90° hybrid 201 or the ports of the right-hand and left-hand circular-polarized antenna. The RF detectors 202, 203 rectify the incident waves of different polarization sense. As is known the output voltage is proportional to the incident power of the wave as long as the rectifying RF diodes 202, 203 are not operated in the linear detection region. According to the invention the final demodulation of the baseband signal shall be done by comparing the output voltage of the RF detector circuit 202 associated to the reception path of the left-hand circular-polarized wave 206 to that of the RF detector circuit 203 associated to the reception path of the right-hand circular-polarized wave 207. The comparison can be done by means of a low power CMOS comparator 204 consuming only one or two µA. The output signal of the low power comparator 204 is sampled by a controller 205, typically a low power micro controller 205. State of the art micro controllers intended for battery-powered applications are consuming about 400 µA in the active mode and about 10 µA in the stand-by mode. For additional power saving a wake-up detector circuit, not shown here, should be incorporated into the tag 2. It may consist of two additional low power comparators that sense the output signal of the RF detector circuits 202, 203 associated to the two paths 206, 207 of the left-hand and right-hand circular-polarized signals and compare it to a reference voltage to decide whether a valid signal is present and thereafter to generate a wake-up signal for the control unit 205.

Due to the requirement of low power consumption the tag 2 should not have microwave local oscillators for mixer circuits, as for example FSK demodulation may require, or RF amplifiers, as for instance PSK demodulation circuits need for carrier recovery. Other RFID systems of prior art, such as in EP 0 308 964 A2, often use ASK modulation because it is easy to implement, even though it shows high demodulation error rates. In contrast the CPM according to invention combines high data rates, low demodulation error rates and reduced sensitivity to jamming signals with a simple, space- and power-saving tag design using few electronic components. As an example consider binary ASK modulation, that can be implemented with similar simple circuit complexity and power requirements as CPM. An important problem with ASK is the choice of the fixed reference or decision threshold voltage. If the threshold is too low, jamming signals easily spoil the demodulation, but if it is too high, the detection circuitry 202, 203; 302, 303 including preamplifiers on the tag 2 will need too much power. On the contrary the CPM relies on comparing relative signal strengths of left- and right circular-polarized waves in the demodulation paths or receiver channels 206 and 207; 306 and 307. Therefore linear-polarized jammers are split equally between both receiver channels 206 and 207; 306 and 307 under the assumption of ideal circular-polarized antennas or antenna ports 105; 200; 300 and do not affect the demodulation. Even circular-polarized jamming signals of arbitrary rotation sense are admissible, as long as their strength does not exceed the signal level of the CPM-modulated wave.

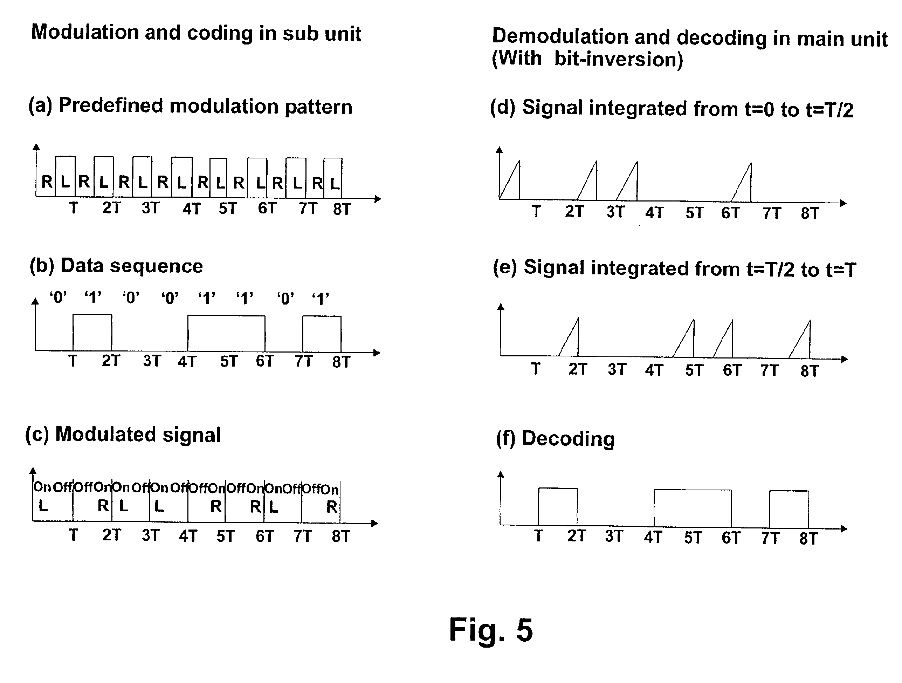

In this section the data transmission from the data carrier 2 to the main unit 1 will be described. According to the goal of the invention to save as much power as possible at the battery-powered data carrier 2 and under the restriction to an active tagging system in order to obtain a larger transmission distance, a kind of active back-scatter transmission based on an on/off keying modulation of signals with different polarization sense is presented. After the reception of the read out command by the main unit 1, the data carrier 2 switches its antenna 200, 201 to the signal path 208, where the active modulator 209 is placed. A battery supply 215 with an activating switch 214 is shown as well. As a signal generation by means of a microwave oscillator or voltage-controlled-oscillator (VCO) as frequency sweeper is prohibitively power-consuming, the active modulator 209 of the first embodiment consists only of an RF amplifier 209 that is normally switched off and can be switched on by means of two double-throw single-pole switches 210, 211 in a forward or backward direction. It hereby amplifies a received left-hand circular-polarized signal and sends it out as right-hand circular-polarized wave and vice versa at the opposite switch positions, respectively. According to the invention the isolation between the input and the output port of the active device 209 is achieved by the crosspolarization isolation of the circularly polarized data carrier antenna 200, 201 to achieve a stable operation of the active device. To read out data from the data carrier 2, the main unit 1 sends out a predefined pattern (Fig. 5) of left-hand and right-hand circularly polarized waves that will be reemitted by the data carrier 2 provided with the above mentioned modulation. The predefined pattern consists of emitting a first circular-polarized wave of duration T/2 with a polarization sense in one direction and afterwards a second circular-polarized wave of opposite polarization sense. For further explanation of the principle it is assumed that the first wave is left-hand circular-polarized and the second wave is correspondingly right-hand circular-polarized. Besides the left-hand circular-polarized wave is associated to a logical "0" and the right-hand circular-polarized wave is attached to a logical "1". Thus the main unit 1 transmits for each period T a logical "0" of duration T/2 and afterwards a logical "1" of same duration where both "0" and "1" are coded by the polarization sense. Based on this predefined pattern the data carrier 2 performs - after a short synchronization phase where a test sequence is transmitted to define the start of the read out process - the transmission of its object identification code or memory data back to the main unit 1 in the following way. The data carrier 2 receives the predefined wave pattern of the main unit 1 by its circular-polarized antenna 200, 201, which is identical to that one already described above at the transmission from the main unit 1 to the data carrier 2. Two double-throw single-pole switches 212, 213 are switched so that the signal path with the active modulator 209 is connected to the circular-polarized antenna 200, 201 of the data carrier 2. According to the received predefined pattern the active modulator 209 is switched either in forward direction connecting the left-hand circular-polarized antenna port with that one generating a right-hand circular-polarized wave or in backward direction connecting the antenna port attached to the reception of a right-hand circular-polarized wave with the antenna port emitting a left-hand circular-polarized wave by means of two single-pole double-throw switches 210, 211. The current consumption of a state of the art RF switch 210, 211, 212, 213 is about 15 µA and an RF amplifier 209 used as active modulator consumes a current of 2mA, where both figures are related to the 2.4 GHz ISM band. The active modulator 209 uses now on/off keying modulation to modulate and reemit the received waves according to the object identification code or memory data.

If for instance a logical "1" has to be transmitted from the data carrier 2 to the main unit 1 the RF amplifier 209 amplifies and back-scatters only the circular-polarized wave of the predefined pattern that is associated to a logical "1". For the above made assumptions this means that the active modulator 209 is switched off during the reception of the first left-hand circular-polarized wave of the predefined pattern which is attached to a logical "0". After T/2 a right-hand circular-polarized wave associated to a logical "1" is emitted by the main unit 1 and the active modulator 209 is poled in the opposite direction and switched on so that it can receive a right-hand circular-polarized wave and back-scatter the amplified wave as a left-hand circular-polarized wave. That is only during a length of time T/2 of the predefined pattern of duration T a logical "1" or a logical "0" is amplified and reemitted according to the data to be transmitted to the main unit 1.

Polarization errors of the emitted wave patterns are of no importance because they will be eliminated by analyzing the test sequence at the synchronization phase at the beginning of the transmission so that the amplifier 209 will amplify and reemit the stronger of the two signals appearing at the antenna ports of opposite polarization sense. This can be illustrated by the following example. The main unit 1 emits a right-hand circular-polarized wave attached to a logical "1". Due to multipath propagation the data carrier 2 receives at the antenna port associated to the reception of a left-hand circular-polarized wave a stronger signal than at the other antenna port associated to the reception of a right-hand circular-polarized wave. According to the invention the data carrier 2 defines at the beginning of the transmission a logical "1" as left-hand circular-polarized wave. This definition is valid as long as the channel remains unchanged in terms of the multipath propagation. The freedom of adaptively choosing the polarization sense definition of the reemitted wave affects the demodulation of the data carrier signal at the main unit 1. This will be described in the following section.

The main unit 1 has two identical receiver channels or demodulation paths 106, 107 each comprising a preamplifier 108, 109, an RF detector circuit 110, 111 and a double-throw single-pole switch 112, 113 connected to two integrators 114, 115, 116, 117 where the lower one 115, 117 integrates the rectified signal of the RF detector circuit 110, 111 from time t=0 to t=T/2 and the upper one 114, 116 integrates it from t=T/2 to t=T correspondingly to the duration of the emitted pattern. The described demodulation paths 106, 107 are connected to the antenna ports 104, 105 of the left-hand and right-hand circular-polarized waves by means of two directional couplers 118, 119 branching off the incident reception wave of the antenna and thus separating the transmitter 103 - 105 from the receiver 104, 105, 108 - 123.

According to the invention polarization errors shall not affect the demodulation performance as long as the microwave channel can be assumed as time-invariant during the transmission. The demodulation of the data carrier signal, that should be insensitive to bit inversions due to an odd number of reflections in multipath propagation, can be described as follows. First the output signals of the lower integrators 115, 117 of each demodulation path 106,107 are sampled at t=T/2 and the upper integrators 114, 116 are sampled at t=T by four sampling-and-hold devices 120, 121, 122, 123. The outputs of the sampling-and-hold devices 120, 121, 122, 123, in particular the temporal positions of transmitted bits, are then analyzed by the controller 101. The controller 102 has to find the maximum of the four integrator values. As the lower integrators 115, 117 are associated to a logical "0" and the upper integrator 114, 116 to a logical "1" the logical levels are temporally separated and the final demodulation of the baseband signal is easily done by the knowledge of the temporal position of the maximum. Due to the temporal separation of the logical levels and their demodulation according to the invention, a potential bit inversion induced by odd numbers of reflections of the circular-polarized signal has no effect on the demodulation, provided the circular-polarized waves are split equally to the two demodulation paths 106, 107 by the circular polarized antenna 104, 105. Circular-polarized jamming signals do not spoil the demodulation as long as their power does not exceed the power of the strongest signal.

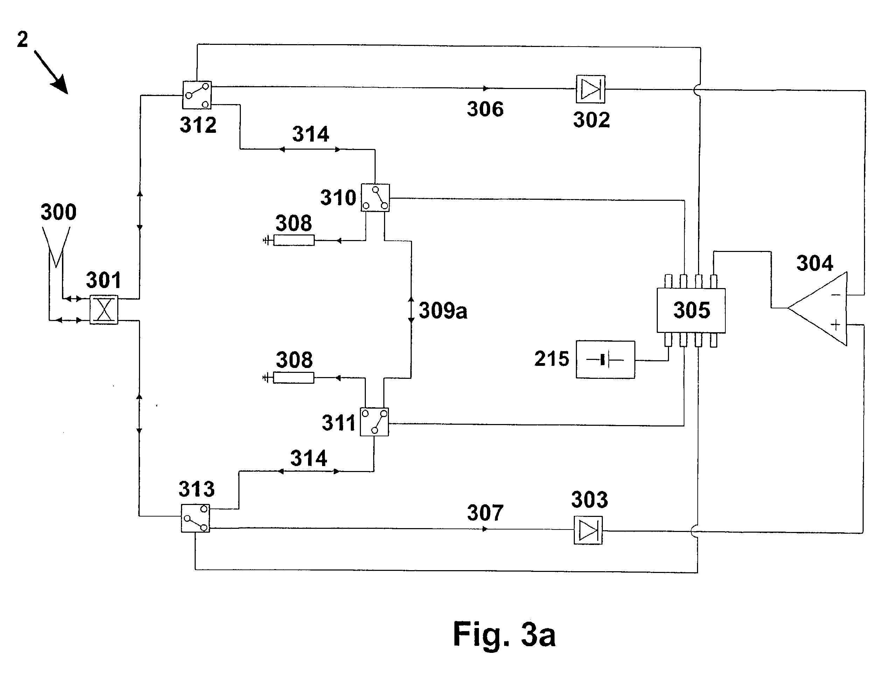

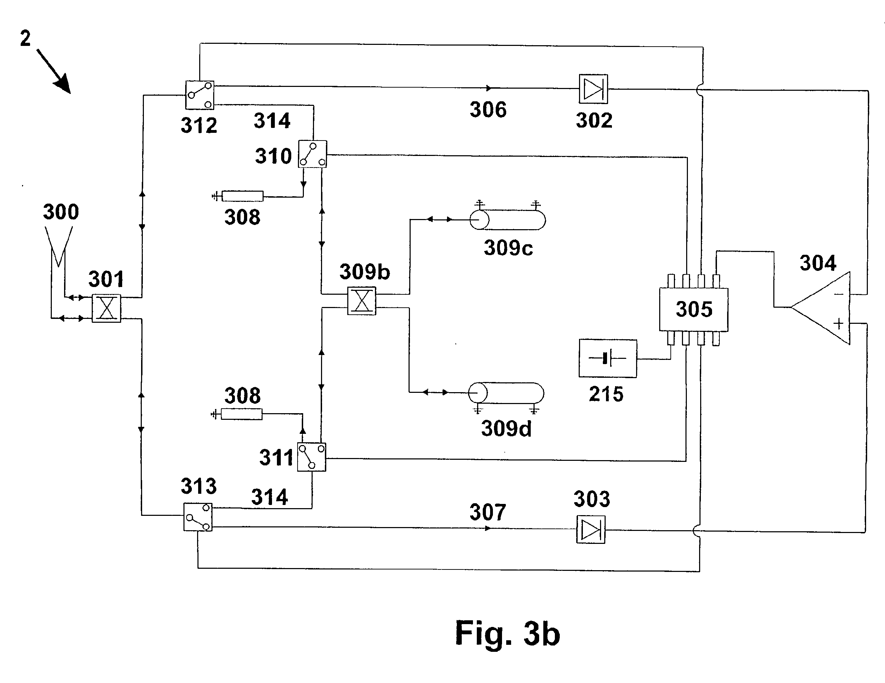

In this section a second embodiment with a fully passive data carrier 2 according to invention is described with reference to Fig. 3a and 3b. As shown for the active data carrier 2 in Fig. 2 the sub unit 2 again comprises a sub receiver 200 - 204; 300 - 304 and a sub transmitter 200, 201, 209 - 211; 300, 301, 308 - 311 with either a dual-polarized antenna 200; 300 connected to a hybrid 201; 301 or two orthogonally circular-polarized antennas for receiving and transmitting left and right circular polarized waves; as well the sub receiver 200 - 204; 300 - 304 further comprises two RF detectors 202, 203; 302, 303 connected to a comparator 204; 304 in series with the sub controller 205; 305 for comparing signal levels of left and right circular-polarized waves. 315 indicates a long-lived battery. The demodulation of the circular polarization modulated carrier from the main unit 1 is equal to that already described at the first embodiment and does not need any further discussion. However, in the second embodiment of a sub transmitter 300, 301, 308 - 311 the former RF modulator 209, being controllable by activating means 210, 211, 205 for selective amplification and back-scattering of left or right circular-polarized waves, is replaced by a passive modulator 308 - 311 comprising two double-throw single-pole switches 310, 311 that can be switched according to the data from the memory of the data carrier 2 to the main unit 1 between two usually identical absorbing loads 308 and a transmission line 309a directly connecting the two double-throw single-pole switches 310, 311. In the case where the two double-throw single-pole switches 310, 311 are connected with each other by the transmission line 309a, an incident left-hand circular-polarized wave is emitted as right-hand circular-polarised wave or vice versa. The two double-throw single-pole switches 310, 311 switch the mutually isolated output ports of the 3dB/90° hybrid 305, that is connected to a dual-polarized antenna 300, or the antenna ports of two circularly polarized antennas of opposite polarisation sense (not shown) between the receive path, where the RF detectors 302, 303 and the comparator 304 are located, and the transmit path 314 with the above described passive modulator 308 - 311.

Similar to the first embodiment the main unit 1 emits circular polarization modulated waves with a predefined modulation pattern, which is equal to that already described at the first embodiment. After a short synchronization phase, where the double-throw single-pole switches 310, 311 switch from the receive path to the transmit path and the controller 305 adjusts the toggling rate of the double-throw single-pole switches 310, 311 according to the repetition rate of the predefined modulation pattern, the data carrier 2 transmits the data from its memory to the main unit 1 by selectively reflecting or absorbing the received circular polarization modulated waves.

In order to transmit a logical "1" the double-throw single-pole switches 310, 311 are switched to the transmission line 309a such that a received left-hand circular-polarized wave is emitted as a right-hand circular-polarized wave and vice versa. During the period of the logical "0" of the predefined modulation pattern the absorbing loads 308 are switched by means of the double-throw single-pole switches 310 - 313 to the output ports of the antenna 300, 301. The transmission of a logical "0" is analogous as the transmission line 309a is connecting the mutually isolated output ports of the hybrid 305 while the main unit 1 transmits a circular-polarized wave attached to a logical "0" and the absorbing loads 308 are connected to the mutually isolated hybrid ports 301 during the transmission of a logical "1" of the predefined modulation pattern. The demodulation of the transmitted signals from the data carrier 2 at the main unit 1 is equal to that already described at the first embodiment.

An alternative passive data carrier 2 is shown in Fig. 3b. Here the transmission line 309a is replaced by two reflectors 309b - 309d, in particular two reflection phase shifters 309b - 309d. The reflectors 309b - 309d comprise a 3dB/90° hybrid 309b with a pair of identical passive loads 309c, 309d at its mutually isolated ports and have a reflectivity of one or close to one. The reflectors 309b - 309d perform the same function as the transmission line 309a. In the case of reflection phase shifters 309b - 309d the waves to be back scattered can be on/off and/or phase-modulated with very little power requirements on the data carrier 2.

In conclusion, preferred embodiments of both active and passive sub units 2 according to invention have sub receivers 200 - 204; 300 - 304 and sub transmitters 200, 201, 209 - 211; 300, 301, 308 - 311 comprising either a dual-polarized antenna 200; 300 connected to a hybrid 201; 301 or two orthogonal circular-polarized antennas for receiving and transmitting left and right circular polarized waves and the sub receivers 200 - 204; 300 - 304 further comprise two RF detectors 202, 203; 302, 303 connected to a comparator 204; 304 in series with a sub controller 205; 305 for comparing signal levels of left and right circular-polarized waves. The active and passive modulators 209 - 211 and 308 - 311 comprise activating means 210, 211, 205; 310, 311, 305, in particular switching means 210, 211; 310, 311 and controlling means 205; 305 for selective amplification and back-scattering of left or right circular-polarized waves.

In this section preferred embodiments of the communication protocol are disclosed. Fig. 4 and 5 depict the communication from the main unit 1 to the data carrier 2 and from the data carrier 2 to the main unit 1 for the case of bit inversion due to an odd number of reflections. A data sequence "01001101" is assumed that represents the ASCII-code for the character "M". The synchronization and test sequence, that generates a weak-up signal for the modulator 209 - 211; 308 - 311 in Fig. 2, 3a and 3b, is not shown.

Fig. 4a depicts the data sequence "01001101" to be transmitted. The bit rate is 1/T. In Fig. 4b the coding of the data sequence is shown. A logical "0" is coded with the symbol "00" and a logical "1" is attached to the symbol "01". By this coding the data rate is halved. As shown in Fig. 4c the symbol "01" representing a logical "1" is transmitted as a right-hand circular-polarized wave R of duration T followed by a left-hand circular-polarized wave L of the same duration. A logical "0", which is attached to the symbol "00", is transmitted correspondingly as two right-hand circular-polarized waves R, R of duration T. In Fig. 4d and 4e the received left-hand and right-hand circular-polarized signals R and L at the data carrier 2 are shown after bit inversion in the transmission path. Under the assumption that the minus port of the comparator 204; 304 is connected to the antenna port where the left-hand circular-polarized signal L appears and the plus port of the comparator 204; 304 is correspondingly connected to the reception path of the right-hand circular-polarized signal R, the output signal of the comparator 204; 304 has a signal characteristic as shown in Fig. 4f. By changing the connections of the reception paths so that a left-hand circular-polarized signal L is fed to the plus input of the comparator 204; 304 and the reception path of the right-hand circular-polarized waves R is connected to the minus input the output signal would be inverted compared to the signal characteristic depicted in Fig. 4f. The output signal of the comparator 204; 304 would also be inverted when a "1" in the symbol of Fig. 4c would be transmitted as a left-hand circular-polarized wave L and a "0" correspondingly as a right-hand circular-polarised wave R. For the demodulation and decoding by means of an EXOR-relation between the bit position 2nT and (2n+1)T as depicted in Fig. 4g this potential inversion of the comparator output signal does not care as "1" ⊕ "1" and "0" ⊕ "0" or "1" ⊕ "0" and "0" ⊕ "1", respectively, are the same. The symbol ⊕ represents the EXOR-relation and n=0, 1, 2, ... an integer. Consequently bit inversions do not affect the demodulation, according to invention, of the transmitted data sequence "01001101".

It should be noted that the output signal of a comparator 204; 304, which is normally slightly lower than a positive or negative threshold value, can be clipped by a diode so that the output signals become the positive threshold value and zero. In this form the output signal can be better sampled by a micro-controller 205, 305.

The embodiment of Fig. 4 is based on an EXOR-relation where a logical "0" is coded with the two-bit symbols "00" and "11" and a logical "1" is coded with the two-bit symbols "01" and "10". Assuming a time-invariant channel differential coding can also be used where a logical "0" is coded as a transient from a left-hand to a right-hand circular-polarized wave and a logical "1" is assigned correspondingly to the opposite transient or vice versa. According to the invention other encoding schemes are feasible that use multi-bit symbols and are invariant under binary inversions.

In Fig. 5 the communication from the data carrier 2 to the main unit 1 is exemplified when a bit inversion occurs in the transmission path. In general a predefined bit pattern is sent by the main unit 1, a plurality of bits or each bit of the bit pattern is on/off- and/or phase-modulated according to the data to be transmitted and is back-scattered by the sub unit 2, and the back-scattered bit pattern is demodulated by the main unit 1. In particular, the bit pattern contains pairs of bits and in the sub unit 2 logical values "0", "1" are modulated onto the bit pattern by back-scattering either the first or the second bit of a bit pair. In a similar way multi-bit representations of the logical values "0" and "1" are feasible.

As shown in Fig. 5a the data carrier 2 receives a predefined modulation pattern of a continuous sequence of "1"s and "0"s. This sequence may be represented by a sequence of circular-polarized waves with identical or changing rotation sense. In a particularly simple embodiment logical "1"s are transmitted as left-hand circular-polarized waves L and logical "0"s as right-hand circular-polarized waves R. A change or alternation of the rotation sense can be used to detect time-variant paths with changing numbers of reflections. In Fig. 5b the response data sequence "01001101" and in Fig. 5c the circular-polarization modulated signal to be back scattered are depicted. The first bit, in this case the most significant bit, is a logical "0". Therefore the incident right-hand circular-polarized wave is back-scattered as a left-hand circular-polarized wave by means of the tag modulator 209 - 211; 308 - 311 during the time t=0 until t=T/2 when the corresponding logical "0" of the predefined modulation pattern is transmitted. During the tag 2 receiving the left-hand circular-polarized wave of the predefined modulation pattern from t=t/2 to t=T, which is attached to a logical "1", the tag modulator 209 - 211; 308 - 311 is switched off so that no wave is back scattered.

In Fig. 5d and 5e the bit-inverted received signals at the integrator outputs of the main unit 1 are depicted. The lower integrator of the path where the right-hand circular-polarized signals appear integrates the signals attached to the transmission of a logical "0" in each bit period from t=0 to t=T/2. The upper integrator in the reception path of left-hand circular-polarized signals integrates the signals attached to the transmission of a logical "1" in each bit period from t=T/2 to t=T.

According to Fig. 5f the demodulation and decoding is done by determining the temporal position of the maximum signal value of all four integrator output signals. If the maximum value appears at the lower integrator which is attached to the bit period from t=0 to t=T/2, a logical "0" has been transmitted. If the maximum value appears at the upper integrator, a logical "1" has been transmitted.

Owing to bit inversions the reception paths or receiver channels 106 and 107 are permuted, but the signal characteristics of Fig. 5d and 5e remain unchanged. Furthermore an originally (at the predefined modulation pattern) right-hand circular-polarized signal is returned as right-hand circular-polarized signal, too. Transmitted and received signals have the same polarization sense and therefore directional couplers 118, 119 are used to separate the transmitted and received signals in the main unit 1. In any case a correct demodulation and decoding can be achieved by determination of the temporal position of the maximum integrator output value.

In this last section further embodiments of inward communication and corresponding modifications of the main unit 1 are described. These embodiments are designed to further improve the isolation between sending and receiving signals at the main unit 1 and in particular to improve the reception of the back-scatter modulated signal. These implementations of the main unit 1 are particularly useful in environments with large signal transmission losses.

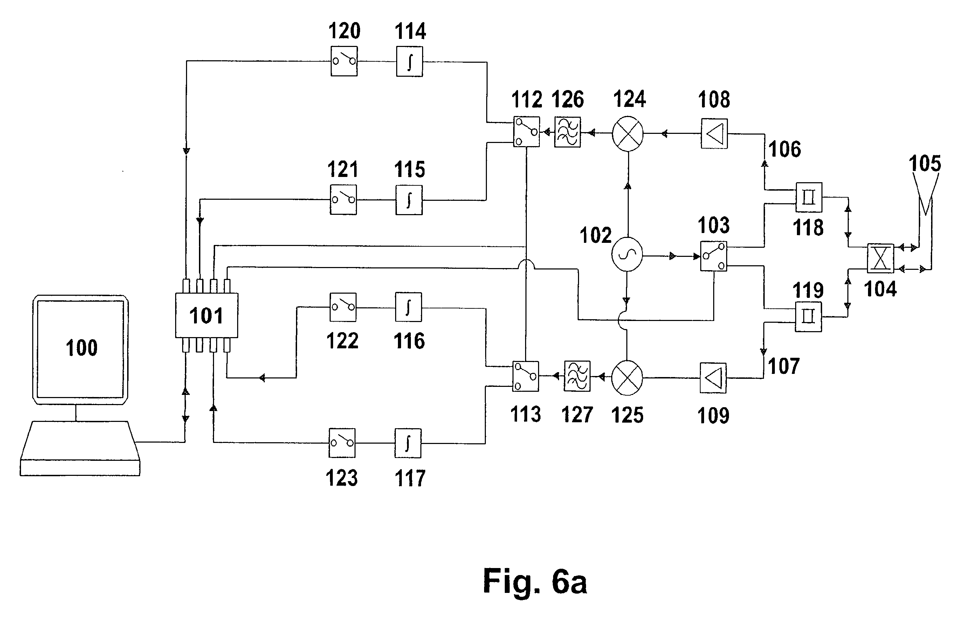

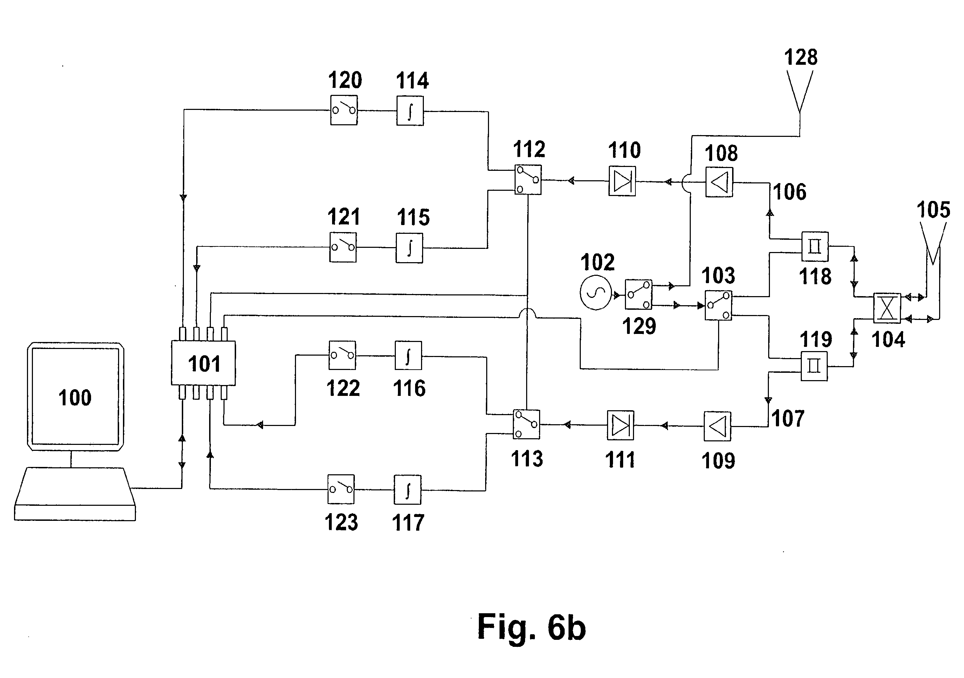

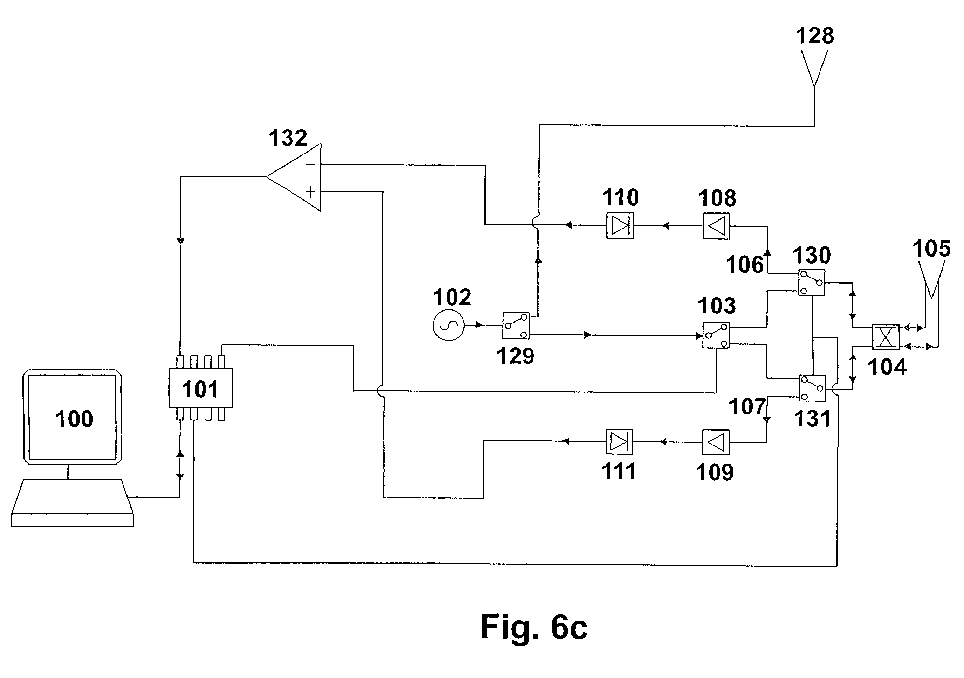

A weak reception signal back-scattered from the data carrier 2 may be difficult to detect with circular-polarized antennas. Due to their relatively poor crosspolarization isolation the separation of the mutually decoupled input ports of the hybrid 104 is too low, and thus the power of the received wave can often be much lower than the power superimposed from the input port. By using a microstrip hybrid 104 as polarizer a crosspolarization isolation of about 30 dB to 40 dB is feasible. Therefore the transmission distance is mainly limited by the crosspolarization isolation and not by the sensitivity of the receiver circuit itself, which is about -70dBm for a signal with a video bandwidth of 10kHz. For a low cost product a sophisticated and expensive polarizer with improved crosspolarization isolation may probably be undesirable. To enhance the crosspolarization isolation a left-hand and right-hand circular-polarized antenna can be used instead of a single dual-polarised antenna with a hybrid 104 as polarizer. By separating these antennas by about one wavelength a minimum of crosspolarization isolation can be obtained. The disadvantage of such a set-up is that it takes more space. Therefore, some modifications of the main unit 1 are described which can be applied in case that the crosspolarization isolation of the circular-polarized main unit antenna is too low. The presented modifications concern only the communication from the data carrier 2 to the main unit 1 by means of the back-scatter modulation discussed earlier. A first modification of the main unit 1 of Fig. 1 is described with reference to Fig. 6a, where the RF detectors 110, 111 are replaced by mixers 124, 125 with attached low frequency bandpass filters 126, 127 to detect the sideband carriers of the received left-hand and right-hand circular-polarized waves. The software and the other hardware components of the main and sub unit 1, 2 remain unchanged. A second modification of the main unit 1 of Fig. 1 is described with reference to Fig. 6b and 6c. In Fig. 6b the only modification compared to Fig. 1 is that the RF carrier for the back-scatter modulation is transmitted by an additional linear-polarized antenna 128 that is connected to the microwave generator 102 by an additional switch 129. The rest of the hardware of the main and sub unit 1, 2 remains unchanged. Only some software modifications have obviously to be made. Fig. 6c shows a low cost alternative of the main unit 1 according to Fig. 6b, where some parts of the receiver hardware are omitted or simplified.

The fist modification of the receiving part of the main unit 1 is depicted in Fig. 6a. The idea of this modification is to get rid of the disturbing cross-talk power from the mutually isolated port of the hybrid 104. This can be done by detecting in the main unit 1 only the power of sidebands of the circular polarization-modulated signal from the sub unit 2. The sidebands are caused by the switching function of the modulating data sequence on the data carrier 2.

A very simple solution (not shown) is to use series capacitances between the RF detector diodes 110, 111 and the integrators 114 - 117 so that the dc-part of the detector output voltage, which belongs to the rectified received or cross-coupled RF carrier, is blocked and only the ac-part of the received rectified signal, which ac-part is equal to the information carrying sideband of the back-scatter modulated RF carrier, is let through. The series capacitances while being highpass filters perform essentially the task of low-frequency bandpass filters, since the higher harmonics are rather weak.

Another solution is depicted in Fig. 6a. As the sensitivity of detector diodes is much lower than the sensitivity of mixers used as detectors, the detectors 110, 111 of Fig. 1 are replaced by two identical single-sideband mixers or single-sideband downconverters 124, 125. Single-sideband mixers 124, 125 are necessary because the received back-scattered signal is a double-sideband signal and the downconversion by a double-sideband mixer would cancel the downconverted sideband after every displacement of the data carrier 2 from the main unit 1 by a multiple of its wavelength. Low-frequency bandpass filters 126, 127 at the intermediate frequency port of the single-sideband mixers 124, 125 suppress the dc-part of the intermediate frequency signal that belongs to the downconverted received or coupled RF carrier and pass only the desired sideband that is processed by the subsequent receiving circuitry 112 - 123 as described above in the description of Fig. 1. The use of single-sideband mixers 124, 125 as detectors solves the problem of cross-talk or low crosspolarization isolation of the microstrip hybrid 104 used as polarizer for the circular-polarized antenna. Moreover the sensitivity of the mixers 124, 125 used as detectors for the sidebands, that are caused by the switching of the back-scatter modulated binary data from the data carrier 2, is about 40 dB to 50 dB better than for the simple solution of cross-talk suppression by a series-capacitance after the RF detector diodes 110, 111. In conclusion, by blocking the cross-talk power and by detecting the sidebands induced by the modulating binary data the problem of low crosspolarization isolation is solved. In order to demodulate the sidebands an RF detector comprising an RF detector diode 110, 111 with a low-frequency bandpass filter 126, 127 at its output is described that shows a low circuit complexity but also a lower detection sensitivity (typically 30 mV/µW) than a more complex single-sideband downconverter whose intermediate frequency is low-frequency bandpass-filtered to pass only the desired sideband to the subsequent demodulating and decoding circuitry 112 - 123.

The second modification of the main unit 1 describes another simple method to circumvent the problem of poor crosspolarization isolation, wherein a linear-polarized antenna is used at the main unit 1 to transmit an unmodulated linear-polarized RF carrier for back-scatter modulation by the data carrier 2. As shown below the coupling between the linear-polarized and circular-polarized antennas of the main unit 1 does not affect the reception and demodulation of circular polarization-modulated signals from the sub unit 2.

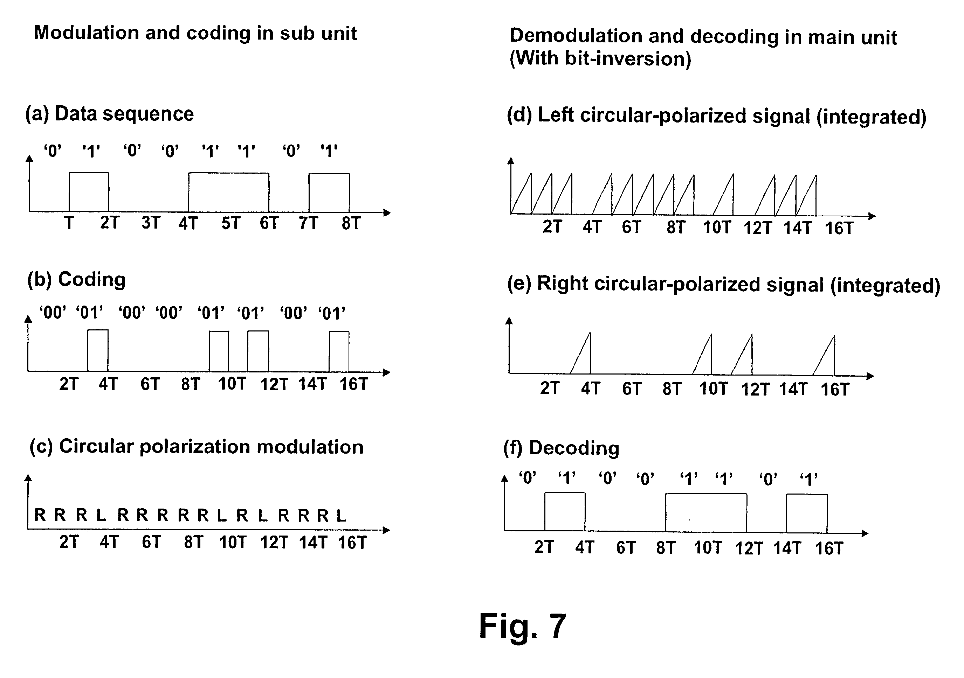

The tag 2 receives the linear-polarized RF carrier with its circular-polarized antenna 200, 300 so that the power of the received linear-polarized wave is split equally to the left-hand and right-hand circular-polarized antenna port. By means of its modulator 209 - 211; 308, 309a; 308, 309b - 309d the data carrier 2 performs the circular polarization modulation as already described in the communication from the main unit 1 to the tag 2. Preferentially the binary data from the data carrier 2 are coded to be insensitive to polarization inversions during transmission by the symbols "00" or "11" and "10" or "01" as described above. The zeros and ones in the symbols are transmitted as left-hand or right-hand circular-polarized waves. If a one has to be transmitted the modulator 209 - 211; 308, 309a; 308, 309b - 309d, in particular the active modulator 209, feeds the received possibly amplified linear-polarized wave appearing at the right-hand circular-polarized port to the antenna port that emits a left-hand circular-polarized wave. A zero is transmitted correspondingly as a wave of opposite polarization sense. An illustration of this kind of back-scatter modulation is given in Fig. 7. It should be noted that the hardware of the data carrier 2 is the same as depicted in Fig. 2. Only the software of the microprocessor 205, 305 on the data carrier 2 has to be modified accordingly.

The circular polarization-modulated RF carrier from the tag 2 is received by the circular-polarized antenna of the main unit 1. Now the advantage of the circular polarization modulation becomes visible. As the transmitting linear-polarized antenna 128 of the main unit 1 also couples to the circular-polarized receiving antenna 105, the coupled power is split equally to the left-hand and right-hand circular-polarized antenna ports. As described above the demodulation of the circular polarization-modulated waves is executed by comparing the power of the received left-hand and right-hand circular-polarized waves. Therefore a weak circular-polarized signal can be detected even if its power is much lower than the power coupled from the transmitting antenna. This embodiment of circular polarization modulation is substantially different from the transmission method disclosed in WO 90/10200. Even though a linear-polarized carrier is transmitted by the main unit and is back-scattered by the data carrier as circular-polarized wave in WO 90/10200 as well, the problem of cross-coupling between the transmission and reception antenna of the main unit is unsolved as the demodulation of the back-scattered ASK-modulated circular-polarized waves actually requires a very high polarization isolation between the linear-polarized transmitting and receiving antennas. Practical measurements showed that the transmission distance of this system is still limited by the coupling between the linear-polarized main unit antennas and not by the sensitivity of the RF receiver, as is the case with the circular polarization modulation according to this invention. The demodulation of the circular polarization-modulated signal at the main unit 1 can be done by the same hardware as shown in Fig. 1. That is, the lower integrators 115, 117 integrate the first bit of the symbol from t=0 to t=T and the upper integrators 114, 116 integrate the second bit of the symbol from t=T to t=2T. The microprocessor 101 of the main unit 1 reads the output values of the sample-and-hold devices 121, 123 attached to the lower integrators 115, 117 at t=T and those of the sample-and-hold devices 120, 122 connected to the upper integrators 114, 116 at t=2T. Then it calculates the maximums values at t=T and t=2T and performs an EXOR-relation between them. If the maximum values at both times are from sample-and-hold devices of the same demodulation path 106, 107 then a logical "0" is detected. If the first maximum value is attached to the demodulation path of left circular-polarized waves and the second maximum value belongs to a sample-and-hold device of the demodulation path for right circular-polarized waves or vice versa, then a logical "1" is detected. This corresponds to the above mentioned coding. It should be noted that the hardware of the main unit 1 remains as in Fig.1, except the additional linear-polarized transmission antenna 128 in Fig. 6b and 6c. Only the software of the main controller 101 must be modified. Furthermore it is emphasized that signal integration can be abandoned if the expected level of signal fading is sufficiently low.

As mentioned above the modulation scheme and coding of the back-scattered waves from the data carrier 2 are the same as that for communication from the main unit 1 to the data carrier 2, as shown in Fig. 4. Therefore the receiver 104 - 105, 108 - 127 of the main unit 1 may have the same hardware as the receiver 200 - 204; 300 - 304 of the data carrier 2. Fig 6c shows an alternate hardware of the main unit 1. The difference to Fig. 6b is that two double-throw single-pole switches 130, 131 switch the two mutually isolated output ports of the antenna hybrid 104 to two identical demodulation paths 106, 107 comprising an RF preamplifier 108, 109 and an RF detector 110, 111. These two identical demodulation paths 106, 107 are connected to the inputs of a comparator 132 for demodulation of left and right circular-polarized waves. In particular the comparator output signal is sampled by the controller 101 that demodulates and decodes the sampled data sequence by executing an EXOR-relation between the bit at the time t=2nT and t=(2n+1)T. Again the linear-polarized RF carrier is transmitted by a linear-polarized antenna 128 which can be connected by a switch 129 to a fixed frequency oscillator 102 or to a frequency sweeper 102.

The above description of the main unit 1 according to Fig. 6a - 6c shows some methods for improving the transmission range if the cross-polarization isolation of the main circular-polarized antenna 105 is limiting the required power level of the received back-scattered waves from the data carrier 2. Several demodulation circuits for the back-scattered signal are presented that differ with respect to circuit complexity and detecting sensitivity.

In summary the apparatus according to invention has at least one main unit 1 and one or several sub units 2 that comprise circular-polarized antennas for transmitting and receiving circular-polarized waves and the main unit 1 and the sub unit 2 further comprise means for binary modulation and demodulation of a rotation sense of the circular-polarized waves in at least one communication direction. Preferentially the receivers 104 - 105, 108 - 127, 130 - 132; 200 - 204; 300 - 304 of both the main and sub unit 1, 2 each comprise two receiver channels 106 and 107; 206 and 207; 306 and 307 for demodulation of left and right circular-polarized waves. In particular the transmitters 103 - 105; 200, 201, 209 - 211; 300, 301, 308 - 311 of the main and sub unit 1, 2 comprise means for alternately activating 103; 210, 211; 310, 311 orthogonal circular-polarized antenna ports 104, 105; 200, 201; 300, 301. With advantage a plurality of main units 1 and sub units 2 is provided and the sub units 2 are attachable to objects. Communication schemes are presented that are insensitive to circular polarization inversion and that reduce or eliminate cross-talk of the outward-bound RF carrier with the inward-bound polarization-modulated back scatter signals. In particular the cross-talking power of a linear-polarized outward-bound carrier is cancelled in the main unit 1 in the two receiver channels 106 and 107 for demodulation of left and right circular-polarized waves. As well linear-polarized jammers are cancelled in the sub unit 2 in the two receiver channels 206 and 207; 306 and 307 for demodulation of left and right circular-polarized waves. The method according to invention is particularly useful to transmit test sequences, commands or data from the main unit 1 to the sub unit 2 for the purpose of synchronization, identification, wake-up and request for response.

It should be emphasized that arbitrary combinations of the features according to invention, such as unidirectional or bidirectional circular polarization modulation, symbol encoding for outward and/or inward communication, time encoding for inward communication and the use of active or passive tags 2 are feasible and each have specific merits.

## Claims

1. A method for radio communication between a main unit (1) and a sub unit (2), where binary data are exchanged in the form of bit sequences by means of modulated RF waves or microwaves, **characterized in that** for communication in at least one direction the waves are circular polarization-modulated such that bits of information to be communicated ("0", "1") are represented by orthogonal circular polarizations (R, L).

2. The method for radio communication according to claim 1, wherein the waves are circular polarization-modulated in both communication directions.

3. The method for radio communication according to one of the claims 1 - 2, wherein demodulating the data comprises the step of analyzing (101; 205; 305) a sequential order and/or temporal positions of transmitted bits.

4. The method for radio communication according to one of the claims 1 - 3, wherein for communication from the main unit (1) to the sub unit (2) and/or for communication from the sub unit (2) to the main unit (1)
a) logical values ("0", "1") of the binary data are encoded by multi-bit symbols such that
b) a plurality of multi-bit symbols are separated into a first and second group to represent a logical "0" and a logical "1" and that the first and second group are both invariant under binary inversions, and
c) after transmission and demodulation the symbols are decoded in the sub unit (2).

5. The method for radio communication according to claim 4, wherein
a) one logical value ("0", "1") is encoded by a first symbol with two identical bits ("11", "00") that are transmitted as a sequence of two equally circular-polarized waves (RR, LL) of duration T each,
b) the other logical value ("1", "0") is encoded by a second symbol with two different bits ("10", "01") that are transmitted as a sequence of two differently circular-polarized waves (RL, LR) of duration T each and
c) after transmission and demodulation of the symbols the logical values ("0", "1") are decoded by comparing (205; 305) the bits of each symbol with an EXOR-relation.

6. The method for radio communication according to one of the claims 1 - 5, wherein the communication from the sub unit (2) to the main unit (1) comprises the following steps:
a) a predefined bit pattern is sent by the main unit (1),
b) each bit of the bit pattern is on/off- and/or phase-modulated according to the data to be transmitted and is back-scattered by the sub unit (2) and
c) the back-scattered bit pattern is demodulated by the main unit (1).

7. The method for radio communication according to claim 6, wherein
a) the bit pattern contains pairs of bits and
b) in the sub unit (2) logical values ("0", "1") are modulated onto the bit pattern by back-scattering either the first or the second bit of a bit pair.

8. The method for radio communication according to claim 7, wherein
a) the bit pattern consists of left and right circular-polarized waves, that are emitted alternately during half intervals T/2 and represent a first logical value ("0", "1") in first time intervals 0...T/2 and a second logical value ("1", "0") in second time intervals T/2...T,
b) the pattern is on/off modulated such that either a first or second logical value ("0", "1") is back scattered by the sub unit (2) during time intervals 0...T and
c) the data are demodulated by comparing signals of both left and right circular-polarized waves during first time intervals 0...T/2 with those of second time intervals T/2...T.

9. The method for radio communication according to one of the claims 1 - 8, wherein for communication from the sub unit (2) to the main unit (1) only power of a sideband of a circular polarization-modulated signal from the sub unit (2) is detected by the main unit (1).

10. The method for radio communication according to one of the claims 1 - 5, wherein the communication from the sub unit (2) to the main unit (1) comprises the following steps:
a) an unmodulated linear-polarized RF carrier is transmitted by the main unit (1),
b) the RF carrier is split in left and right circular-polarized waves, is circular polarization-modulated and is back-scattered by the sub unit (2) and
c) the circular polarization-modulated RF carrier is received by a circular-polarized antenna of the main unit (1) and is demodulated.

11. The method for radio communication according to one of the claims 1 - 10, wherein
a) the sub unit (2) is battery-powered (214, 215) and
b) in the sub unit (2) incoming waves are amplified by an RF amplifier (209) and back scattered with orthogonal circular polarization.

12. The method for radio communication according to one of the claims 1 - 11, wherein
a) in the main unit (1) the step of demodulation includes signal integration (114 - 117) to minimize fading and/or
b) test sequences, commands or data are sent from the main unit (1) to the sub unit (2) for the purpose of synchronization, identification, wake-up and request for response.

13. A signal transmission apparatus for radio communication between at least one main unit (1) and at least one sub unit (2), in particular suitable for implementation of the method according to one of the claims 1 - 12, comprising said at least one main unit (1) with a controller (101) to control a microwave generator (102), a transmitter (103 - 105, 128 - 129) and a receiver (104 - 105, 108 - 127, 130 - 132), and said at least one sub unit (2) with a sub controller (205; 305) to control a sub transmitter (200, 201, 209 - 211; 300, 301, 308 - 311) and a sub receiver (200 - 204; 300 - 304), wherein
the main unit (1) and the sub unit (2) comprise antennas for transmitting and receiving circular-polarized waves for communication between said at least one main unit (1) and said at least one sub unit (2),
the signal transmission apparatus being **characterised in that**
said at least one
main unit (1) and said at least one sub unit (2) further comprise means for binary modulation and demodulation of a rotation sense of the circular-polarized waves to be transmitted and received in at least one communication direction

14. The signal transmission apparatus according to claim 13, wherein the receivers (104 - 105, 108 - 127, 130 - 132; 200 - 204; 300 - 304) of the main and sub unit (1, 2) comprise two receiver channels (106 and 107; 206 and 207; 306 and 307) for demodulation of left and right circular-polarized waves.

15. The signal transmission apparatus according to one of the claims 13 - 14, wherein the transmitters (103 - 105; 200, 201, 209 - 211; 300, 301, 308 - 311) of the main and sub unit (1, 2) comprise means for alternately activating (103; 210, 211; 310, 311) orthogonal circular-polarized antenna ports (104, 105; 200, 201; 300, 301).

16. The signal transmission apparatus according to one of the claims 13 - 15, wherein in the main unit (1)
a) the microwave generator (102) is a microwave oscillator (102) or a microwave frequency sweeper,
b) the transmitter (103 - 105, 128 - 129) and the receiver (104 - 105, 108 - 127, 130 - 132) comprise either a dual circular-polarized antenna (105) connected to a hybrid (104) or two orthogonal circular-polarized antennas and
c) in particular the transmitter (103 - 105, 128 - 129) comprises an additional linear-polarized antenna (128) switchably (129) connected to the microwave generator (102) for transmitting a linear-polarized RF carrier.

17. The signal transmission apparatus according to claim 16, wherein
a) the receiver (104 - 105, 108 - 127, 130 - 132) further comprises two preamplifiers (108, 109) followed by either RF detectors (110 - 111) with optional series capacitances or by single-sideband mixers (124, 125) with low-frequency bandpass filters (126, 127), which detectors (110 - 111) or mixers (124, 125) are switchably (112, 113) connected to four receiver sections (114, 120; 115, 121; 116, 122; 117, 123) for separate demodulation of left and right circular-polarized waves in different time intervals or
b) the receiver (104 - 105, 108 - 127, 130 - 132) further comprises two preamplifiers (108, 109) followed by RF detectors (110 - 111), that are connected to a comparator (132) for demodulation of left and right circular-polarized waves.

18. The signal transmission apparatus according to one of the claims 16 - 17, wherein
a) each receiver section (114, 120; 115, 121; 116, 122; 117, 123) comprises an integrator (114 - 117) to prevent signal fading and/or
b) directional couplers (118, 119) or double-throw single-pole switches (130, 131) separate the transmitter (103 - 105) and the receiver (104 - 105, 108 - 127, 130 - 132).

19. The signal transmission apparatus according to one of the claims 13 - 18, wherein in the sub unit (2)
a) the sub receiver (200 - 204; 300 - 304) and the sub transmitter (200, 201, 209 - 211; 300, 301, 308 - 311) comprise either a dual-polarized antenna (200; 300) connected to a hybrid (201; 301) or two orthogonal circular-polarized antennas for receiving and transmitting left and right circular-polarized waves and
b) the sub receiver (200 - 204; 300 - 304) further comprises two RF detectors (202, 203; 302, 303) connected to a comparator (204; 304) in series with the sub controller (205; 305) for comparing signal levels of left and right circular-polarized waves.

20. The signal transmission apparatus according to one of the claims 13 - 19, wherein
a) the sub unit (2) has a battery supply (214, 215) and
b) the sub transmitter (200, 201, 209 - 211) comprises an RF amplifier (209) that is controllable by activating means (210, 211, 205) for selective amplification and back-scattering of left or right circular-polarized waves.

21. The signal transmission apparatus according to one of the claims 13 - 19, wherein the sub transmitter (300, 301, 308 - 311) comprises two absorbing loads (308) and a transmission line (309a) that can alternately be activated by activating means (310, 311, 305) for selective back-scattering of left or right circular-polarized waves.

22. The signal transmission apparatus according to one of the claims 13 - 19, wherein the sub transmitter (300, 301, 308 - 311) comprises two absorbing loads (308) and two reflectors (309b - 309d), in particular reflection phase shifters (309b - 309d), that can alternately be activated by activating means (310, 311, 305) for selective back-scattering of left or right circular-polarized waves.

## Patentansprüche

1. Verfahren zur Funkübertragung zwischen einer Haupteinheit (10) und einer Untereinheit (2), wobei binäre Daten in der Form von Bitsequenzen mittels modulierter RF-Wellen oder Mikrowellen ausgetauscht werden, **dadurch gekennzeichnet, dass** für die Übertragung in wenigstens einer Richtung die Wellen zirkularpolarisationsmoduliert werden, sodass Bits von zu übertragender Information ("0", "1") durch orthogonale Zirkularpolarisation (R, L) repräsentiert werden.

2. Verfahren zur Funkübertragung nach Anspruch 1, wobei die Wellen in beiden Übertragungsrichtungen zirkularpolarisationsmoduliert werden.

3. Verfahren zur Funkübertragung nach einem der Ansprüche 1 - 2, wobei das Demodulieren der Daten den Schritt des Analysierens (101; 205; 305) eines sequentiellen Ablaufs und/oder von zeitlichen Positionen übertragener Bits umfasst.

4. Verfahren zur Funkübertragung nach einem der Ansprüche 1 - 3, wobei für die Übertragung von der Haupteinheit (1) zu der Untereinheit (2) und/oder für die Übertragung von der Untereinheit (2) zu der Haupteinheit (1)
a) logische Werte ("0", "1") der binären Daten durch Multibit-Symbole kodiert werden, sodass
b) eine Vielzahl von Multibit-Symbolen in eine erste und eine zweite Gruppe aufgeteilt werden, um eine logische "0" und eine logische "1" zu repräsentieren, und dass die erste und die zweite Gruppe beide unter binären Inversionen invariant sind, und
c) nach Übermittlung und Demodulation die Symbole in der Untereinheit dekodiert werden.

5. Verfahren zur Funkübertragung nach Anspruch 4, wobei
a) ein logischer Wert ("0", "1") durch ein erstes Symbol mit zwei identischen Bits ("11", "00") kodiert wird, die jede als eine Sequenz aus zwei gleichermassen zirkularpolarisierten Wellen (RR, LL) der Dauer T übermittelt werden,
b) der andere logische Wert ("1", "0") durch ein zweites Symbol mit zwei unterschiedlichen Bits ("10", "01") kodiert wird, die jede als eine Sequenz aus zwei unterschiedlichen zirkularpolarisierten Wellen (RL, LR) der Dauer T übermittelt werden, und
c)' nach Übermittlung und Demodulation der Symbole die logischen Werte ("0", "1") durch Vergleichen (205; 305) der Bits eines jeden Symbols mit einer EXOR-Verknüpfung dekodiert werden.

6. Verfahren zur Funkübertragung nach einem der Ansprüche 1 - 5, wobei die Übertragung von der Untereinheit (2) zu der Haupteinheit (1) die folgenden Schritte umfasst:
a) ein vordefiniertes Bitmuster wird von der Haupteinheit (1) gesendet,
b) jedes Bit des Bitmusters wird on/off-und/oder phasenmoduliert entsprechend den zu übermittelnden Daten und wird von der Untereinheit (2) rückgestreut und
c) das rückgestreute Bitmuster wird von der Haupteinheit (1) demoduliert.

7. Verfahren zur Funkübertragung nach Anspruch 6, wobei
a) das Bitmuster Paare von Bits enthält,
b) in der Untereinheit (2) durch Rückstreuung entweder des ersten oder des zweiten Bits eines Bitpaares logische Werte ("0", "1") auf das Bitmuster moduliert werden.

8. Verfahren zur Funkübertragung nach Anspruch 7, wobei
a) das Bitmuster aus links- und rechtszirkularpolarisierten Wellen besteht, die abwechselnd während Halbintervallen T/2 ausgegeben werden und einen ersten logischen Wert ("0", "1") in ersten Zeitintervallen 0...T/2 und einen zweiten logischen Wert ("1", "0") in zweiten Zeitintervallen T/2...T repräsentieren,
b) das Muster derart on/off-moduliert ist, dass entweder ein erster oder ein zweiter logischer Wert ("0", "1") von der Untereinheit (2) während Zeitintervallen O...T rückgestreut wird und
c) die Daten durch Vergleichen von Signalen von sowohl links- als auch rechtszirkularpolarisierten Wellen während ersten Zeitintervallen O...T/2 mit denen von zweiten Zeitintervallen T/2...T demoduliert werden.

9. Verfahren zur Funkübertragung nach einem der Ansprüche 1 - 8, wobei für die Übertragung von der Untereinheit (2) zu der Haupteinheit (1) nur Leistung eines Seitenbands eines zirkularpolarisationsmodulierten Signals von der Untereinheit (2) durch die Haupteinheit (1) erfasst wird.

10. Verfahren zur Funkübertragung nach einem der Ansprüche 1 - 5, wobei die Übertragung von der Untereinheit (2) zu der Haupteinheit (1) die folgenden Schritte umfasst:
a) ein unmoduliertes linearpolarisiertes RF-Trägersignal wird von der Haupteinheit (1) übermittelt,
b) das RF-Trägersignal wird in links- und rechtszirkularpolarisierte Wellen aufgeteilt, zirkularpolarisationsmoduliert und von der Untereinheit (2) rückgestreut und
c) das zirkularpolarisationsmodulierte RF-Trägersignal wird von einer zirkularpolarisierten Antenne der Haupteinheit (1) empfangen und demoduliert.

11. Verfahren zur Funkübertragung nach einem der Ansprüche 1 - 10, wobei
a) die Untereinheit (2) batteriebetrieben (214, 215) ist und
b) in der Untereinheit (2) eingehende Wellen durch einen RF-Verstärker (209) verstärkt werden und mit orthogonaler Zirkularpolarisation rückgestreut werden.

12. Verfahren zur Funkübertragung nach einem der Ansprüche 1 - 11, wobei
a) in der Haupteinheit (1) der Schritt der Demodulation Signalintegration (114 - 117) beinhaltet, um Fading zu minimieren und/oder
b) Testsequenzen, Befehle oder Daten von der Haupteinheit (1) zu der Untereinheit (2) für den Zweck der Synchronisation, der Identifikation, des Weckens and der Abfrage einer Antwort gesendet werden.

13. Signalübermittlungsvorrichtung zur Funkübertragung zwischen wenigstens einer Haupteinheit (1) und wenigstens einer Untereinheit (2), welche insbesondere zur Implementierung der Methode nach einem der Ansprüche 1 - 12 geeignet ist, die wenigstens eine Haupteinheit (1) mit einem Controller (101) zum Steuern eines Mikrowellengenerators (102), eines Übermittler (103 - 105, 128 - 129) und eines Empfänger (104 - 105, 108 - 127, 130 - 132) und wenigstens eine Untereinheit (2) mit einem Untercontroller (205; 305) zum Steuern eines Unterübermittlers (200, 201, 209 - 211; 300, 301, 308 - 311) und eines Unterempfängers (200 - 204; 300 - 304) umfasst, wobei die Haupteinheit (1) und die Untereinheit (2) Antennen zum Übermitteln und Empfangen von zirkularpolarisierten Wellen für die Übertragung zwischen der wenigstens einen Haupteinheit (1) und der wenigstens einen Untereinheit (2) umfassen,
**dadurch gekennzeichnet, dass** die wenigstens eine Haupteinheit (1) und die wenigstens eine Untereinheit (2) weiter Mittel zur binären Modulation und Demodulation einer Drehrichtung der zu übermittelnden und zu empfangenden zirkularpolarisierten Wellen in wenigstens einer Übertragungsrichtung umfassen.

14. Signalübermittlungsvorrichtung nach Anspruch 13, wobei die Empfänger (104 - 105, 108 - 127, 130 - 132; 200 - 204; 300 - 304) der Haupt- und der Untereinheit (1, 2) zwei Empfängerkanäle (106 und 107; 206 und 207; 306 und 307) zur Demodulation von links- und rechtszirkularpolarisierten Wellen umfassen.

15. Signalübermittlungsvorrichtung nach einem der Ansprüche 13 - 14, wobei die Übermittler (103 - 105; 200, 201, 209 - 211; 300, 301, 308 - 311) der Haupt- und der Untereinheit (1, 2) Mittel zur abwechselnden Aktivierung (103; 210, 211; 310, 311) von orthogonal zirkularpolarisierten Antennenanschlüssen (104, 105; 200, 201; 300, 301) umfassen.

16. Signalübermittlungsvorrichtung nach einem der Ansprüche 13 - 15, wobei in der Haupteinheit (1)
a) der Mikrowellengenerator (102) ein Mikrowellenoszillator (102) oder ein Mikrowellenfrequenzwobbler ist,
b) der Übermittler (103 - 105, 128 - 129) und der Empfänger (104 - 105, 108 - 127, 130 - 132) entweder eine dual zirkularpolarisierte Antenne (105), die mit einem Richtkoppler (104) verbunden ist, oder zwei orthogonal zirkularpolarisierte Antennen umfassen und
c) insbesondere der Übermittler (103 - 105, 128 - 129) eine zusätzliche linearpolarisierte Antenne (128), die schaltbar (129) mit dem Mikrowellengenerator (102) verbunden ist, zur Übermittlung eines linearpolarisierten RF-Trägersignals umfasst.

17. Signalübermittlungsvorrichtung nach Anspruch 16, wobei
a) der Empfänger (104 - 105, 108 - 127, 130 - 132) weiter zwei Vorverstärker (108, 109) gefolgt entweder von RF-Detektoren (110 - 111) mit optionalen Reihenkapazitäten oder von Einseitenbandmischern (124, 125) mit Niederfrequenzbandpassfiltern (126, 127) umfasst, wobei die Detektoren (110 - 111) oder Mischer (124, 125) schaltbar (112, 113) mit vier Empfängersektionen (114, 120; 115, 121; 116, 122; 117, 123) verbunden sind zur separaten Demodulation von links- und rechtszirkularpolarisierten Wellen in unterschiedlichen Zeitintervallen, oder
b) der Empfänger (104 - 105, 108 - 127, 130 - 132) weiter zwei Vorverstärker (108, 109) gefolgt von RF-Detektoren (110 - 111) umfasst, die mit einem Komparator (132) zur Demodulation von links- und rechtszirkularpolarisierten Wellen verbunden sind.

18. Signalübermittlungsvorrichtung nach einem der Ansprüche 16 - 17, wobei
a) jede Empfängersektion (114, 120; 115, 121; 116, 122; 117, 123) einen Integrator (114 - 117) umfasst, um Signalfading zu verhindern und/oder
b) Richtungskoppler (118, 119) oder einpolige Umschalter (130, 131) den Übermittler (103 - 105) und den Empfänger (104 - 105, 108 - 127, 130 - 132) trennen,

19. Signalübermittlungsvorrichtung nach einem der Ansprüche 13 - 18, wobei in der Untereinheit (2)
a) der Unterempfänger (200 - 204; 300 - 304) und der Unterübermittler (200, 201, 209 - 211; 300, 301, 308 - 311) entweder eine dual polarisierte Antenne (200; 300), die mit einem Richtkoppler (201; 301) verbunden ist, oder zwei orthogonal zirkularpolarisierte Antennen zum Empfangen und Übermitteln von links- und rechtszirkularpolarisierten Wellen umfassen und
b) die Unterempfänger (200 - 204; 300 - 304) weiter zwei RF-Detektoren (202, 203; 302, 303), die mit einem Komparator (204; 304) in Serie mit dem Untercontroller (205; 305) verbunden sind, umfasst, um Signalpegel von links- und rechtszirkularpolarisierten Wellen zu vergleichen.

20. Signalübermittlungsvorrichtung nach einem der Ansprüche 13 - 19, wobei
a) die Untereinheit (2) eine Batterieversorgung (214, 215) hat und
b) die Unterübermittler (200, 201, 209 - 211) einen RF-Verstärker (209) umfassen, der durch Aktivierungsmittel (210, 211, 205) steuerbar ist, zur selektiven Verstärkung und Rückstreuung von links- or rechtszirkularpolarisierten Wellen.

21. Signalübermittlungsvorrichtung nach einem der Ansprüche 13 - 19, wobei der Unterübermittler (300, 301, 308 - 311) zwei absorbierende Lasten (308) und eine Übertragungsleitung (309a) umfasst, welche abwechselnd durch Aktivierungsmittel (310, 311, 305) aktiviert werden können zum selektiven Rückstreuen von links- oder rechtszirkularpolarisierten Wellen.

22. Signalübermittlungsvorrichtung nach einem der Ansprüche 13 - 19, wobei der Unterübermittler (300, 301, 308 - 311) zwei absorbierende Lasten (308) und zwei Reflektoren (309b - 309d), insbesondere Reflexionsphasenschieber (309b - 309d), umfasst, die abwechselnd durch Aktivierungsmittel (310, 311, 305) aktiviert werden können zum selektiven Rückstreuen von links- oder rechtszirkularpolarisierten Wellen.

## Revendications

1. Procédé de communication radio entre une unité principale (1) et une unité secondaire (2), dans lequel des données binaires sont échangées sous la forme de séquences de bits au moyen d'ondes ou de micro-ondes RF modulées, **caractérisé par le fait que** pour la communication dans au moins une direction, les ondes sont modulées par polarisation circulaire de sorte que les bits d'information à communiquer ("0", "1") sont représentés par des polarisations circulaires orthogonales (D, G).

2. Procédé de communication radio selon la revendication 1, dans lequel les ondes sont modulées par polarisation circulaire dans les deux sens de communication.

3. Procédé de communication radio selon l'une des revendications 1 ou 2, dans lequel les données comprennent l'étape d'analyse (101 ; 205 ; 305) d'un ordre de séquences et/ou des positions temporelles des bits transmis.

4. Procédé de communication radio selon l'une des revendications 1 à 3, dans lequel pour la communication depuis l'unité principale (1) vers l'unité secondaire (2) et/ou pour la communication depuis l'unité secondaire (2) vers l'unité principale (1)
a) des valeurs logiques ("0", "1") des données binaires sont encodées par des symboles multi-bits de sorte que
b) une pluralité de symboles multi-bits sont séparés en un premier et un second groupes pour représenter un "0" logique et un "1" logique et que le premier et le second groupes sont tous les deux invariants sous inversion binaire, et
c) après transmission et démodulation les symboles sont décodés dans l'unité secondaire (2).

5. Procédé de communication radio selon la revendication 4, dans lequel
a) une valeur logique ("0", "1") est encodée par un premier symbole avec deux bits identiques ("11", "00") qui sont transmis en tant que séquence de deux ondes également polarisées circulaires (DD, GG) d'une durée T chacune,
b) l'autre valeur logique ("1", "0") est encodée par un second symbole avec deux bits différents ("10" , "01") qui sont transmis en tant que séquence de deux ondes différemment polarisées circulaires (DG, GD) d'une durée T chacune et
c) après la transmission et la démodulation des symboles, les valeurs logiques ("0" , "1 ") sont décodées en comparant (205 ; 305) les bits de chaque symbole avec une relation OUX

6. Procédé de communication radio selon l'une des revendications 1 à 5, dans lequel la communication depuis l'unité secondaire (2) vers l'unité principale (1) comprend les étapes suivantes :
a) une configuration binaire prédéfinie est envoyée par l'unité principale (1),
b) chaque bit de la configuration binaire est phasé ou déphasé et/ou en modulation de phase selon les données à transmettre et est rétrodiffusé par l'unité secondaire (2) et
c) la configuration binaire rétrodiffusée est démodulée par l'unité principale (1).

7. Procédé de communication radio selon la revendication 6, dans lequel
a) la configuration binaire contient des paires de bits et
b) dans l'unité secondaire (2) les valeurs logiques ("0", "1") sont modulées sur la configuration binaire en rétrodiffusant soit le premier, soit le second bit de la paire de bits.

8. Procédé de communication radio selon la revendication 7, dans lequel
a) la configuration binaire consiste en des ondes polarisées circulaires gauches et droites, qui sont émises alternativement pendant des demi intervalles T/2 et représentent une première valeur logique ("0" , "1") dans les premiers intervalles de temps 0... T/2 et une seconde valeur logique ("1" , "0") dans les seconds intervalles de temps T/2-T.
b) la configuration est modulée en présence/absence de la porteuse de sorte que soit la première soit la seconde valeur logique ("0", "1") est rétrodiffusée par l'unité secondaire (2) pendant les intervalles de temps 0...T et
c) les données sont démodulées en comparant les signaux à la fois des ondes polarisées circulaires gauches et droites pendant les premiers intervalles de temps 0... T/2 avec ceux des seconds intervalles de temps T/2...T.

9. Procédé de communication radio selon l'une des revendications 1 à 8, dans lequel pour la communication depuis l'unité secondaire (2) vers l'unité principale (1) seule la puissance de la bande latérale d'un signal modulé à polarisation circulaire provenant de l'unité secondaire est détectée par l'unité principale (1).

10. Procédé de communication radio selon l'une des revendications 1 à 5, dans lequel la communication depuis l'unité secondaire (2) vers l'unité principale (1) comprend les étapes suivantes :
a) une porteuse RF polarisée linéairement non modulée est transmise par l'unité principale (1),
b) la porteuse RF est fractionnée en ondes polarisées circulaires gauches et droites, est modulée par polarisation circulaire et est rétrodiffusée par l'unité secondaire (2), et
c) la porteuse RF modulée par polarisation circulaire est réceptionnée par l'antenne polarisée circulaire de l'unité principale (1) et est démodulée.

11. Procédé de communication radio selon l'une des revendications 1 à 10, dans lequel
a) l'unité secondaire (2) est alimentée par une batterie (214, 215) et
b) dans l'unité secondaire (2) les ondes entrantes sont amplifiées par un amplificateur RF (209) et rétrodiffusées avec une polarisation circulaire orthogonale.

12. Procédé de communication radio selon l'une des revendications 1 à 11, dans lequel
a) dans l'unité principale (1) l'étape de démodulation comprend l'intégration du signal (114 - 117) afin de minimiser l'évanouissement et/ou
b) des séquences de test, des commandes ou des données sont envoyées depuis l'unité principale (1) vers l'unité secondaire (2) dans un objectif de synchronisation, d'identification, de réveil et de demande de réponse.

13. Appareil de transmission de signaux pour communication radio entre au moins une unité principale (1) et au moins unité secondaire (2), adaptées, en particulier, à la mise en place du procédé selon l'une quelconque des revendications 1 à 12, comprenant une unité principale (1) avec un contrôleur (101) ledit au moins contrôleur servant à contrôler un générateur de micro ondes (102), un émetteur (103 - 105, 128 - 129) et un récepteur (104 - 105, 108 - 127, 130 - 132), et ladite au moins unité secondaire (2) avec un contrôleur secondaire (205 ; 305) pour commander un émetteur secondaire (200, 201, 209 - 211 ; 300, 301, 308 - 311) et un récepteur secondaire (200 - 204 ; 300 - 304), dans lequel
l'unité principale (1) et l'unité secondaire (2) comprennent des antennes pour l'émission et la réception d'ondes polarisées circulaires pour la communication entre ladite au moins unité principale (1) et ladite unité secondaire (2), l'appareil de transmission de signal étant **caractérisé par le fait que**,
ladite au moins unité principale (1) et ladite au moins unité secondaire (2) comprennent en outre des moyens pour la modulation et la démodulation binaire d'un sens de rotation des ondes à polarisation circulaire devant être émises et réceptionnées dans au moins un sens de communication.

14. Appareil de transmission de signaux selon la revendication 13, dans lequel les récepteurs (104 - 105, 108 - 127, 130 - 132 ; 200 - 204 ; 300 - 304) de l'unité principale et de l'unité secondaire (1, 2) comprennent deux canaux de réception (106 et 107 ; 206 et 207 ; 306 et 307) pour la démodulation des ondes polarisées circulaires gauches et droites.

15. Appareil de transmission de signaux selon l'une des revendications 13 -14, dans lequel les émetteurs (103 -105 ; 200, 201, 209 - 211 ; 300, 301, 308 - 311) de l'unité principale et de l'unité secondaire (1, 2) comprennent des moyens pour activer alternativement (103 ; 210, 211 ; 310, 311) des ports (104, 105 ; 200, 201 ; 300, 301) d'antenne polarisée circulaire orthogonale.

16. Appareil de transmission de signaux selon l'une des revendications 13 - 15, dans lequel, dans l'unité principale (1)
a) le générateur à micro-ondes (102) est un oscillateur hyperfréquence (102) ou un balayeur de fréquence à micro-ondes,
b) l'émetteur (103 - 105, 128 - 129) et le récepteur (104 - 105, 108 - 127, 130 - 132) comprennent, soit une antenne polarisée circulaire double (105) connectée à un hybride (104), soit deux antennes polarisées circulaires, et
c) en particulier, l'émetteur (103 - 105, 128 - 129) comprend une antenne polarisée linéaire supplémentaire (128) connectée de façon à pouvoir être commutée (129) au générateur à micro-ondes (102) pour transmettre une porteuse RF polarisée linéaire.

17. Appareil de transmission de signaux selon la revendication 16, dans lequel
a) le récepteur (104 - 105, 108 - 127, 130 - 132) comprend également deux préamplificateurs (108, 109) suivis soit de détecteurs RF (110 - 111) avec des capacités en série optionnelles, soit des mélangeurs à bande latérale unique (124, 125) avec des filtres passe-bande à basse fréquence (126, 127), dont les détecteurs (110 - 111) ou les mélangeurs (124, 125) sont connectés de façon à pouvoir être commutés (112, 113) à quatre sections de récepteur (114, 120 ; 115, 121 ; 116, 122 ; 117, 123) pour la démodulation séparée des ondes polarisées circulaires gauches et droites dans des intervalles de temps différents, ou
b) le récepteur (104 - 105, 108 - 127, 130 - 132) comprend également deux préamplificateurs (108, 109) suivis de détecteurs RF (110 - 111), qui sont connectés à un comparateur (132) pour la démodulation des ondes polarisées circulaires gauches et droites.

18. Appareil de transmission de signaux selon l'une des revendications 16 - 17, dans lequel
a) chaque section de récepteur (114, 120 ; 115, 121 ; 116, 122 ; 117, 123) comprend un intégrateur (114-117) pour empêcher l'évanouissement du signal et/ou
b) des coupleurs directifs (118, 119) ou des commutateurs unipolaires bidirectionnels (130, 131) séparent l'émetteur (103 - 105) et le récepteur (104 - 105, 108 - 127, 130 - 132).

19. Appareil de transmission de signaux selon l'une des revendications 13 - 18, dans lequel dans l'unité secondaire (2)
a) le récepteur secondaire (200 - 204 ; 300 - 304) et l'émetteur secondaire (200, 201, 209 - 211 ; 300, 301, 308 - 311) comprennnent soit une antenne à double polarisation (200 ; 300) connectée à un hybride (201 ; 301), soit deux antennes polarisées circulaires orthogonales pour réceptionner et transmettre des ondes polarisées circulaires gauches et droites et
b) le récepteur secondaire (200 - 204 ; 300 - 304) comprend également deux détecteurs RF (202, 203 ; 302, 303) connectés à un comparateur (204 ; 304) en série avec le contrôleur secondaire (205 ; 305) pour comparer les niveaux de signaux des ondes polarisées circulaires gauches et droites.

20. Appareil de transmission de signaux selon l'une des revendications 13-19, dans lequel
a) l'unité secondaire (2) comporte une alimentation par batterie (214, 215) et
b) l'émetteur secondaire (200, 201, 209 - 211) comprend un amplificateur RF (209) contrôlable par des moyens d'activation (210, 211, 205) pour l'amplification sélective et la rétrodiffusion des ondes polarisées circulaires gauches et droites.

21. Appareil de transmission de signaux selon l'une des revendications 13 - 19, dans lequel l'émetteur secondaire (300, 301, 308 - 311) comprend deux charges d'absorption (308) et une ligne de transmission (309a) pouvant être alternativement activées par des moyens d'activation (310, 311, 305) pour la rétrodiffusion sélective des ondes polarisées circulaires gauches et droites.

22. Appareil de transmission de signaux selon l'une des revendications 13 - 19, dans lequel l'émetteur secondaire (300, 301, 308 - 311) comprend deux charges d'absorption (308) et deux réflecteurs (309b - 309d), dans des déphaseurs particuliers (309b - 309d), pouvant être alternativement activés par des moyens d'activation (310, 311, 305) pour la rétrodiffusion sélective des ondes polarisées circulaires gauches et droites.
